# EUROPEAN PATENT APPLICATION

(11) **EP 3 508 074 A1**
(43) Date of publication of application: **10.07.2019**
(21) Application number: 17846636.3
(22) Date of filing: 31.08.2017
(51) Int. Cl.: A23L 31/15, A23L 27/10, A23C 9/152, A23L 2/38, A23L 2/66, A23L 23/00

(54) **YEAST EXTRACT FOR ENHANCING RICHNESS AND CREAMY FEEL**

(30) Priority: 02.09.2016 JP 2016172132
(71) Applicant: KOHJIN Life Sciences Co., Ltd., Tokyo 100-0006 (JP)
(72) Inventor: YAMASHITA, Hirotaka, Tokyo 100-0006 (JP); IKEDA, Sakiko, Tokyo 100-0006 (JP); UCHIMURA,Nobuhiro, Tokyo 100-0006 (JP); SATO, Toshiya, Tokyo 100-0006 (JP)
(74) Representative: Müller-Boré & Partner Patentanwälte PartG mbB
(86) International application number: PCT/JP2017/031319
(87) International publication number: WO 2018/043632

(57) **Abstract**

[Problem]

This invention addresses the problem of enhancing the richness of generic processed food and beverage items without imparting a disagreeable flavor and without increasing the calorie count or salt content. The additive to be added in this case is preferably a generic food item that is highly safe. [Solution] An appropriate amount of a yeast extract is added to a generic processed food and beverage item, the yeast extract having a peptide content of 5 wt% or higher, an RNA content of 5 wt% or higher, a free amino acid content of 6 wt% or lower, a glutathione content of 0.5 wt% or higher, and preferably, additionally a dietary fiber content of 15 wt% or higher.

## Description

### Technical Field

The present invention relates to a yeast extract which is effective in enhancing the richness and creamy feel of a food and beverage item when added to the food and beverage item.

### Background Art

In addition to the basic five tastes of sweetness, sourness, saltiness, bitterness, and umami, there is an important element called "richness". Although it is difficult to define the richness, in general, yeast extracts to enhance the richness of food items are reported in Patent Literatures 1, 2, 3, etc. In particular, the yeast extract including a high peptide content and a high RNA content, as described in Patent Literature 3, is superior in that it is possible to impart richness without imparting a disagreeable flavor to food items and without increasing the calorie count or salt content.

Incidentally, for example, in the case of soup, not only creamy feel but also richness is an important point of palatability. Particularly, some soup obtained by preparing powder raw materials make people feel a powdery taste when they drink it, which is one of the causes of impairment of luxurious appearance. Therefore, there is a demand for a method for imparting a creamy texture with no powdery feel.

In addition, in the case of protein beverages and protein supplements used as healthy food items or powdered milk for cow's milk allergy (i.e., food items for patients), the bitterness derived from the main ingredients as well as the powdery taste make people feel unpleasant. Accordingly, there is a need for reducing the bitterness and powdery taste.

### Citation List

### Patent Literature

Patent Literature 1: JP 2009-44978 A
Patent Literature 2: JP 2005-245438 A
Patent Literature 3: WO 2013/031571

### Summary of Invention

### Technical Problem

The problem to be solved is to enhance the richness of generic processed food and beverage items without imparting a disagreeable flavor and without increasing the calorie count or salt content. Further, it is to reduce the powdery feel to increase the creamy feel, especially in soup, healthy food items, and food items for patients, and to mask the bitterness. The additive to be added in this case is preferably a generic food and beverage item that is highly safe.

### Solution to Problem

As a result of intensive research to solve the above-mentioned problems, the present inventors have found that a yeast extract having a specific composition is added to food and beverage items, whereby it is possible to impart strong richness to the food and beverage items without imparting a disagreeable flavor thereto, and to increase the creamy feel. Further, they have found that when the food and beverage items to which the yeast extract is added have an unpleasant taste such as bitterness, it is possible to mask the unpleasant taste.

That is, the present invention is as follows:
(1) A yeast extract including a peptide content of 5 wt% or higher; an RNA content of 5 wt% or higher; a free amino acid content of 6 wt% or lower; and a glutathione content of 0.5 wt% or higher;
(2) A yeast extract including: a peptide content of 5 wt% or higher; an RNA content of 5 wt% or higher; a free amino acid content of 6 wt% or lower; and a glutathione content of from 0.5 to 4.0 wt%;
(3) The yeast extract according to (1) or (2), where the dietary fiber content in the yeast extract is 15 wt% or higher;
(4) A yeast extract for enhancing the richness and creamy feel of a food and beverage item, where the yeast extract is the yeast extract according to any one of (1) to (3); and
(5) A taste-improving agent for a food and beverage item including the yeast extract according to any one of (1) to (3) as an active ingredient.

### Advantageous Effects of Invention

According to the present invention, a small amount of a yeast extract (i.e., a generic food item) is added to a generic processed food and beverage item, whereby it is possible to remarkably enhance the richness of the food and beverage item without imparting any disagreeable flavor and to increase the creamy feel. Further, in the case of a food and beverage item with strong bitterness and unpleasant taste, it is possible to mask the strong bitterness and unpleasant taste.

Since the yeast extract is a generic food item and has low allergenicity, it serves as a taste-improving agent with high safety.

### Description of Embodiments

Hereinafter, the present invention will be described in detail.

The yeast extract of the present invention contains a peptide in a dry weight amount of 5 wt% or higher, preferably 10 wt% or higher, and more preferably 16 wt% or higher, contains RNA in a dry weight amount of 5 wt% or higher, preferably 10 wt% or higher, and more preferably 20 wt% or higher, contains glutathione in a dry weight amount of 0.5 wt% or higher, preferably from 0.5 to 4.0 wt%, and contains a free amino acid in a dry weight amount of 6 wt% or lower, and preferably 4 wt% or lower. The yeast extract having the composition hardly impart a disagreeable flavor despite the fact that the yeast extract is highly effective in enhancing the richness of food and beverage items. Further, the yeast extract has an excellent effect of masking strong bitterness of food items. More preferably, the yeast extract satisfies the above conditions and also has a dietary fiber content of 15 wt% or higher.

The "peptide" referred to in the present invention refers to one in which two or more amino acids are peptide-bonded, and the peptide content is calculated by subtracting the amount of free amino acids from the total amount of amino acids. Glutathione to be described later is also included in this peptide content.

The yeast extract of the present invention has a peptide content of 5 wt% or higher, preferably 10 wt% or higher, and more preferably 15 wt% or higher. Meanwhile, the free amino acid content is preferably low, preferably 6 wt% or lower, and more preferably 4 wt% or lower.

The yeast extract of the present invention has an RNA content of 5 wt% or higher, more preferably 10 wt% or higher, and still more preferably 20 wt% or higher. In contrast to that, the inosinic acid content and the guanylic acid content are preferably low, each of which is preferably 1 wt% or lower, and more preferably 0.5 wt% or lower, in terms of disodium salt heptahydrate. When the inosinic acid content and the guanylic acid content are high, umami is imparted to the food item to which the yeast extract is added.

Glutathione used in the present invention includes reduced glutathione and oxidized glutathione. Reduced glutathione refers to a tripeptide having the γ-L-Glu-L-Cys-Gly structure, and oxidized glutathione refers to a molecule in which two molecules of reduced glutathione are linked by an SS bond. The glutathione content referred in the present invention is the total content of reduced glutathione and oxidized glutathione.

The yeast extract of the present invention has a glutathione content of 0.5 wt% or higher, preferably a glutathione content of from 0.5 to 4.0 wt%. When the glutathione content exceeds 4.0 wt%, depending on the food item to which glutathione is added, the food item may have a disagreeable flavor.

Yeast cells as raw materials of the yeast extract of the present invention preferably have an RNA content of 6.5 wt% or higher and a glutathione content of 0.5 wt% or higher in the dried yeast cells.

The method for increasing an RNA content in yeast cells is publicly known and is described in, for example, JP 52-90684 A, JP 11-196859 A, and JP 2009-207464 A.

Further, glutathione is generally contained in yeast, among which those including a suitable glutathione content may be used.

The yeast extract of the present invention can be obtained in the following manner. The yeast cells are cultured, harvested, and washed. The enzymes in the yeast cells are deactivated with hot water, and then separated into cells and supernatant. A cell wall lytic enzyme is added to the cells to obtain an extract, and part or all of the supernatant is added to the extract, followed by concentration, sterilization, and drying. During the step, the pH may be appropriately adjusted in order to change the extraction rate. When the extract is treated with a nucleolytic enzyme or a proteolytic enzyme, the RNA content and the peptide content are unlikely to be a specified content, and thus this is undesirable.

When the RNA content or the peptide content in the yeast extract is less than the specified content, concentration may be carried out by a known method. When the free amino acid content in the yeast extract is too high, it may be removed by a known purification method.

In addition, a plurality of yeast extracts is mixed so as to have the composition of the present invention and the resulting mixture may be used as the yeast extract of the present invention.

The sweetness, sourness, saltiness taste, bitterness, umami, and richness of the yeast extract itself are hardly felt. The yeast extract strongly enhances the richness of a food and beverage item when added to the food and beverage item, and further masks an unpleasant protein odor and bitterness.

Examples of yeasts used for the production of the yeast extract include baker's yeast, beer yeast (Saccharomyces cerevisiae), and torula yeast (Candida utilis). Among them, the torula yeast whose RNA content is generally considered to be high is preferably used.

Examples of generic food and beverage items usable in the present invention include various food items such as sweet food items (e.g., chocolate, ice cream, pudding, syrup, custard cream, cream, and cookie), seasonings (e.g., miso, soy sauce, Tsuyu, baste, sauce, dressing, and mayonnaise), dairy processed products (e.g., low-fat milk, fresh cream, skimmed milk, processed cheese, butter, gratin, and white sauce), processed meat products (e.g., ham and sausage), processed marine products (e.g., kamaboko and chikuwa), processed agricultural products (e.g., Japanese pickles and tsukudani), soup, meat extracts, seafood extracts, and fruit juice drinks. In addition to these generic food and beverage items, examples thereof include protein beverages, protein supplements, and infant powdered milk.

The amount of the yeast extract of the present invention to be added to processed food and beverage items is generally from 0.01 to 1 wt%, preferably from 0.02 to 0.3 wt%, and more preferably from 0.04 to 0.08 wt%. When the amount is within this range, it is possible to remarkably and naturally enhance the richness of the processed food and beverage items, and it is possible to enhance the creamy feel or to mask the bitterness. When the amount of the yeast extract to be added is less than 0.01%, it is difficult to recognize these effects. Further, when the yeast extract is contained in an amount of greater than 1%, the taste of the yeast extract itself is significant, and this is not preferable from the viewpoint of cost.

### Examples

Hereinafter, the present invention will be described in detail with reference to Examples. However, the present invention is not limited to the following mode.

The measurement methods and test methods in Examples were as follows.

### <Method for Measuring Free Amino Acid Content>

A sample prepared by dissolving a yeast extract sample in 0.02 N-HCl was used as a measurement sample. The sample was measured using an amino acid analyzer (Hitachi High-Speed Amino Acid Analyzer L-8900).

### <Method for Measuring Total Amino Acid Content>

The yeast extract sample was dissolved in 6N HCl and allowed to stand at 110°C for 24 hours for hydrolysis. A part of this sample was diluted with 0.02 N-HCl and the diluted sample was used as the total amino acid measurement sample. The sample was measured using an amino acid analyzer (Hitachi High-Speed Amino Acid Analyzer L-8900).

### <Method for Measuring Peptide Content>

The peptide content was calculated by subtracting the free amino acid content from the total amino acid content.

### <Method for Measuring RNA Content>

A sample obtained by dissolving the yeast extract sample in ultrapure water was used as a measurement sample, and the sample was measured by the HPLC method. An Asahipak HPLC column GS-320H was used as a column, and 0.1 M of a sodium phosphate buffer was used as an eluent. The detection wavelength was 260 nm.

### <Method for Measuring Glutathione Content>

Glutathione concentration was measured by the DTNB-HPLC method (Journal of Chromatography, 194 (1980) 424-428). The glutathione content of the present application refers to the total glutathione content of reduced and oxidized glutathione.

### <Method for Measuring Dietary Fiber Content>

The dietary fiber content was measured by the enzymatic gravimetric method in Japan Food Research Laboratories.

### <Method for Performing Sensory Test>

The sensory test of eating quality of each of the samples of the Examples and Comparative Examples was performed on 5 panelists. Each of the results was compared with the taste of the sample of Control, and evaluated with respect to richness, creamy feel, bitterness, disagreeable flavor, and the like.

### Method for Obtaining Yeast Extract

### <Production Example 1>

1000 ml of a 10% cell suspension of Candida utilis Cs 7529 strain (FERM BP-1656) was adjusted to a pH of 3.5 by using a 10 N sulfuric acid, and then was subjected to a heat treatment at 60°C for 30 minutes, after which the suspension was centrifuged and separated into the cells and the supernatant. The supernatant was adjusted to a pH of 7 with an alkali, and the resulting supernatant was defined as a liquid (a).

The obtained cells were washed with water to remove sulfuric acid and excessive extracts. The cells were adjusted and suspended in water to a cell concentration of 10%. The resulting suspension was heated at 90°C for 30 minutes to completely inactivate the enzyme in the cells. The temperature and pH were adjusted to 40°C and 7.0, respectively. 0.5 g of cell wall lytic enzyme ("Tunicase", manufactured by Daiwa Fine Chemicals Co., Ltd.) was added to the suspension and the resulting mixture was reacted for 4 hours to extract an extract. The cell residue was removed by centrifugation, and 15% of the liquid (a) was added to the resulting supernatant. The resulting mixture was concentrated and spray-dried to obtain 31 g of yeast extract powder. The resulting yeast extract (hereinafter referred to as "Yeast Extract 1") had a peptide content of 19.4 wt%, an RNA content of 29.4 wt%, a free amino acid content of 1.8 wt%, a reduced glutathione content of 0.8 wt%, an oxidized glutathione content of 0.1 wt%, a dietary fiber content of 22.1 wt%, an inosinic acid content of 0.1 wt%, and a guanylic acid content of 0.1 wt%.

### <Production Example 2>

A yeast extract powder of Production Example 2 was obtained in the same manner as in Production Example 1 except that the amount of the liquid (a) to be added was changed from 15% to 30% in Production Example 1. The resulting yeast extract (hereinafter referred to as "Yeast Extract 2") had a peptide content of 20.0 wt%, an RNA content of 28.4 wt%, a free amino acid content of 3.2 wt%, a reduced glutathione content of 1.6 wt%, an oxidized glutathione content of 0.2 wt%, a dietary fiber content of 21.4 wt%, an inosinic acid content of 0.1 wt%, and a guanylic acid content of 0.1 wt%.

### <Production Example 3>

A yeast extract powder of Production Example 3 was obtained in the same manner as in Production Example 1 except that the amount of the liquid (a) to be added was changed from 15% to 60% in Production Example 1. The resulting yeast extract (hereinafter referred to as "Yeast Extract 3") had a peptide content of 20.1 wt%, an RNA content of 26.9 wt%, a free amino acid content of 5.0 wt%, a reduced glutathione content of 2.7 wt%, an oxidized glutathione content of 0.3 wt%, a dietary fiber content of 20.5 wt%, an inosinic acid content of 0.1 wt%, and a guanylic acid content of 0.1 wt%.

### <Example 1 and Comparative Examples 1 to 4> Effect of Addition to Cream Mushroom Soup

The raw materials were mixed and dissolved according to the formulation shown in Table 1 to prepare cream mushroom soup of Control, Example 1, and Comparative Examples 1 to 4.

The used yeast extracts and the composition thereof are as follows: Yeast Extract 3 (peptide content: f 20.1 wt%, RNA content: 26.9 wt%, free amino acid content: 5.0 wt%, glutathione content: 3.0 wt%, dietary fiber content: 20.5 wt%, inosinic acid content: 0.1 wt%, guanylic acid content: 0.1 wt%); Yeast Extract 4 (peptide content: 18.7 wt%, RNA content: 30.4 wt%, free amino acid content: 0.5 wt%, glutathione content: 0.0 wt%, dietary fiber content: 22.7 wt%, inosinic acid content: 0.1 wt%, guanylic acid content: 0.1 wt%); Yeast Extract 5 (peptide content: 22.09 wt%, RNA content: 0.00 wt%, free amino acid content: 1.26%, glutathione content: 0.0 wt%, dietary fiber content: 33.3 wt%); and Yeast Extract 6 (peptide content: 32.1 wt%, RNA content: 9.8 wt%, free amino acid content: 27.2 wt%, glutathione content: 17.4 wt%, inosinic acid content: 0.1 wt%, guanylic acid content: 0.2 wt%).

**[Table 1]**

| Cream Mushroom Soup (100mL) | | | | | |
|---|---|---|---|---|---|
| Ingredients | Control | Example 1 | Comparative example 1 | Comparative example 2 | Comparative example 3 |
| Powdered Mushroom | 0.2g | 0.2g | 0.2g | 0.2g | 0.2g |
| Mushroom Flavor | 0.03g | 0.03g | 0.03g | 0.03g | 0.03g |
| Palm Oil | 0.2g | 0.2g | 0.2g | 0.2g | 0.2g |
| Table Salt | 0.8g | 0.8g | 0.8g | 0.8g | 0.8g |
| Skimmed Milk | 2.4g | 2.4g | 2.4g | 2.4g | 2.4g |
| Creaming Powder | 0.2g | 0.2g | 0.2g | 0.2g | 0.2g |
| Starch (tapioka) | 3.0g | 3.0g | 3.0g | 3.0g | 3.0g |
| Dextrin (potato) | 2.00g | 2.00g | 2.00g | 2.00g | 2.00g |
| Powdered Garlic | 0.02g | 0.02g | 0.02g | 0.02g | 0.02g |
| MSG | 0.16g | 0.16g | 0.16g | 0.16g | 0.16g |
| Yeast Extract 3 | | 0.07g | | | |
| Yeast Extract 4 | | | 0.07g | | |
| Yeast Extract 5 | | | | 0.07g | |
| Yeast Extract 6 | | | | | 0.07g |
| HOT WATER | 100mL | 100mL | 100mL | 100mL | 100mL |

The sensory test of eating quality was performed. Each soup of Example 1 and Comparative Examples 1 to 4 was compared with the soup of Control. As a result, the richness and creamy feel of the cream mushroom soup of Example 1 were dramatically improved, compared with the soup of Control. The richness and creamy feel of the soup of Comparative Example 1 were improved, but the richness and creamy feel of the soup of Example 1 were more significant. The umami of the soup of Comparative Example 2 was felt stronger than that of Control, and no improvements in richness and creamy feel were observed. The richness of the soup of Comparative Example 3 was enhanced, compared with that of Control. However, a unique disagreeable flavor was imparted, and the improvement in creamy feel was small. The soup of Comparative Example 4 had a slight disagreeable flavor, compared with the soup of Control, and no improvement in creamy feel was observed.

The above results showed that Yeast Extract 3 (i.e., the yeast extract of the present invention) had an excellent effect of enhancing the richness and creamy feel of the cream mushroom soup, compared with Yeast Extracts 4, 5 and 6 (i.e., other yeast extracts).

### <Example 2 and Comparative Examples 5 to 7> Effect of Addition to Cheese Soup

The raw materials were mixed and dissolved according to the formulation shown in Table 2 to prepare cheese soup of Control, Example 2, and Comparative Examples 5 to 7.

The used yeast extracts and the composition thereof are as follows: Yeast Extract 3 (peptide content: f 20.1 wt%, RNA content: 26.9 wt%, free amino acid content: 5.0 wt%, glutathione content: 3.0 wt%, dietary fiber content: 20.5 wt%, inosinic acid content: 0.1 wt%, guanylic acid content: 0.1 wt%); Yeast Extract 4 (peptide content: 18.7 wt%, RNA content: 30.4 wt%, free amino acid content: 0.5 wt%, glutathione content: 0.0 wt%, dietary fiber content: 22.7 wt%, inosinic acid content: 0.1 wt%, guanylic acid content: 0.1 wt%); Yeast Extract 5 (peptide content: 22.09 wt%, RNA content: 0.00 wt%, free amino acid content: 1.26%, glutathione content: 0.0 wt%, dietary fiber content: 33.3 wt%); and Yeast Extract 6 (peptide content: 32.1 wt%, RNA content: 9.8 wt%, free amino acid content: 27.2 wt%, glutathione content: 17.4 wt%, inosinic acid content: 0.1 wt%, guanylic acid content: 0.2 wt%).

**[Table 2]**

| Cheese Soup (100mL) | | | | | |
|---|---|---|---|---|---|
| Ingredients | Control | Example 2 | Comparative example 4 | Comparative example 5 | Comparative example 6 |
| Cheddar Cheese Powder | 2.0g | 2.0g | 2.0g | 2.0g | 2.0g |
| Parmesan Cheese Powder | 0.4g | 0.4g | 0.4g | 0.4g | 0.4g |
| Powdered Chicken Extract | 1.0g | 1.0g | 1.0g | 1.0g | 1.0g |
| Powdered Onion Extract | 0.5g | 0.5g | 0.5g | 0.5g | 0.5g |
| Table Salt | 0.6g | 0.6g | 0.6g | 0.6g | 0.6g |
| Skimmed Milk | 2.0g | 2.0g | 2.0g | 2.0g | 2.0g |
| Creaming Powder | 1.0g | 1.0g | 1.0g | 1.0g | 1.0g |
| Starch (tapioka) | 3.0g | 3.0g | 3.0g | 3.0g | 3.0g |
| Dextrin (potato) | 1.00g | 1.00g | 1.00g | 1.00g | 1.00g |
| *β*-carotene | 0.007g | 0.007g | 0.007g | 0.007g | 0.007g |
| Yeast Extract 3 | | 0.07g | | | |
| Yeast Extract 4 | | | 0.07g | | |
| Yeast Extract 5 | | | | 0.07g | |
| Yeast Extract 6 | | | | | 0.07g |
| HOT WATER | 100mL | 100mL | 100mL | 100mL | 100mL |

The sensory test of eating quality was performed. Each soup of Example 2 and Comparative Examples 5 to 7 was compared with the soup of Control. As a result, the richness and creamy feel of the cheese soup of Example 2 were dramatically improved, compared with the soup of Control. The richness and creamy feel of Comparative Example 5 were improved, but the richness and creamy feel of Example 2 were more significant. Umami was imparted to Comparative Example 6, and no improvements in richness and creamy feel were observed. The richness of the soup of Comparative Example 7 was enhanced, compared with that of the soup of Control. However, a slight disagreeable flavor was imparted, and the improvement in creamy feel was small.

The above results showed that Yeast Extract 3 (i.e., the yeast extract of the present invention) had an excellent effect of enhancing the richness and creamy feel of the cheese soup, compared with Yeast Extracts 4, 5 and 6 (i.e., other yeast extracts).

### <Example 3 and Comparative Examples 8 to 9> Effect of Addition to Protein Beverage

70 g of commercially available protein "MUSCLE MILK" (manufactured by CytoSport Inc.) powder was dissolved in 300 ml of water, and the resulting mixture was used as a protein beverage of Control. Raw materials of this protein powder were casein, milk protein, whey protein, lactoferrin, L-glutamine, taurine, vegetable oil, and the like.

To 50 ml of the protein beverage of Control, 0.03 g of Yeast Extract 2 (peptide content: 20.0 wt%, RNA content: 28.4 wt%, free amino acid content: 3.2 wt%, glutathione content: 1.8 wt%, dietary fiber content: 21.4 wt%, inosinic acid content: 0.1 wt%, guanylic acid content: 0.1 wt%, inosinic acid content: 0.1 wt%, guanylic acid content: 0.1 wt%) was added and dissolved to prepare a sample for evaluation of Example 3.

Further, to the protein beverage of Control, 0.03 g of Yeast Extract 4 (peptide content: 18.7 wt%, RNA content: 30.4 wt%, free amino acid content: 0.5 wt%, glutathione content: 0.0 wt%, dietary fiber content: 22.7 wt%, inosinic acid content: 0.1 wt%, guanylic acid content: 0.1 wt%) and 0.03 g of Yeast Extract 5 (peptide content: 22.09 wt%, RNA content: 0.00 wt%, free amino acid content: 1.26%, glutathione content: 0.0 wt%, dietary fiber content: 33.3 wt%) were added in place of Yeast Extract 2 to prepare samples for evaluation of Comparative Examples 8 and 9, respectively.

The sensory test of eating quality was performed. Each of the protein beverages of Example 3 and Comparative Examples 8 and 9 were compared with the protein beverage of Control. As a result, the protein beverage of Control had powdery feel, whereas the protein beverage of Example 3 was creamy with suppressed powdery feel and also was an easy-to-drink beverage because the richness was imparted. The protein beverage of Comparative Example 8 was inferior in creamy feel and richness to the protein beverage of Example 3, but the creamy feel and richness was enhanced. The powdery feel of the protein beverage of Comparative Example 9 was not eliminated, and the protein beverage had a disagreeable flavor.

### <Example 4 and Comparative Examples 10 and 11> Effect of Addition to Peptide Milk for Infants

Peptide milk for infants ("E-AKACHAN", manufactured by MORINAGA MILK INDUSTRY CO., LTD), i.e., infant powdered milk in which all the bovine milk proteins were decomposed into peptides, was prepared by the standard method and used as milk of Control.

To the milk of Control, 0.10 wt% of Yeast Extract 1 (peptide content: 19.4 wt%, RNA content: 29.4 wt%, free amino acid content: 1.8 wt%, glutathione content: 0.9 wt%, dietary fiber content: 22.1 wt%, inosinic acid content: 0.1 wt%, guanylic acid content: 0.1 wt%) was added and dissolved, and the resulting milk was used as milk of Example 4.

In addition, 0.10 wt% of Yeast Extract 4 was added to the milk of Control and dissolved, and 0.10 wt% of Yeast Extract 5 was added to the milk of Control and dissolved. The prepared mixtures were used as samples for evaluation of Comparative Examples 10 and 11, respectively.

The sensory test of eating quality was performed. Each of the samples of Example 4 and Comparative Examples 10 and 11 were compared with the sample of Control. As a result, the milk of Control had slight bitterness, whereas the bitterness of the milk of Example 4 was almost masked and the milk was creamy without powdery feel. The bitterness of the milk of Comparative Example 10 was almost masked. Although the creamy feel was inferior to that of Example 4, it was increased. The milk of Comparative Example 11 had a disagreeable flavor.

### <Example 5 and Comparative Examples 12 and 13> Effect of Addition to Infant Powdered Milk for Milk Allergy

Infant powdered milk for milk allergy containing a whey protein digest and a casein digest ("MA-mi", manufactured by MORINAGA MILK INDUSTRY CO., LTD) was prepared by the standard method and used as milk for milk allergy of Control.

To the milk for milk allergy of Control, 0.10 wt% of Yeast Extract 2 (peptide content: 20.0 wt%, RNA content: 28.4 wt%, free amino acid content: 3.2 wt%, glutathione content: 1.8 wt%, dietary fiber content: 21.4 wt%, inosinic acid content: 0.1 wt%, guanylic acid content: 0.1 wt%, inosinic acid content: 0.1 wt%, guanylic acid content: 0.1 wt%) was added and dissolved, and the resulting mixture was used as milk of Example 5.

Further, 0.10 wt% of Yeast Extract 4 was added to the milk for milk allergy of Control and dissolved, and 0.10 wt% of Yeast Extract 5 was added to the milk for milk allergy of Control and dissolved. The prepared mixtures were used as samples for evaluation of Comparative Examples 12 and 13, respectively.

The sensory test of eating quality was performed. Each of the samples of Example 5 and Comparative Examples 12 and 13 were compared with the sample of Control. As a result, the milk for milk allergy of Control had an odor peculiar to the protein digest and slight bitterness, whereas the peculiar odor and bitterness of the milk of Example 5 was masked, the taste of the milk turned into a mild taste with a slight sweet taste, and it was close to ordinary infant milk. The odor and bitterness of the milk of Comparative Example 12 were also masked, but the mellowness was inferior to that of Example 5. The milk of Comparative Example 13 had a disagreeable flavor.

As described above, when the yeast extract of the present invention is added to food items, the richness and creamy feel are remarkably imparted thereto. Further, the yeast extract has an excellent bitterness masking effect, and improves the luxurious appearance and easiness of drinking of the food and beverage items.

### Industrial Applicability

The yeast extract of the present invention can remarkably improve the richness and creamy feel when being added to generic food and beverage items. Further, the yeast extract shows a masking effect when being added to food and beverage items having an unpleasant taste such as bitterness. Consequently, the yeast extract can be suitably used for soup in which the richness and creamy feel need to be improved, healthy food items which avoid powdery feel or unpleasant taste, food items for patients, and the like.

## Claims

1. A yeast extract comprising: a peptide content of 5 wt% or higher; an RNA content of 5 wt% or higher; a free amino acid content of 6 wt% or lower; and a glutathione content of 0.5 wt% or higher.

2. A yeast extract comprising: a peptide content of 5 wt% or higher; an RNA content of 5 wt% or higher; a free amino acid content of 6 wt% or lower; and a glutathione content of from 0.5 to 4.0 wt%.

3. The yeast extract according to claim 1 or 2, wherein a dietary fiber content in the yeast extract is 15 wt% or higher.

4. A yeast extract for enhancing richness and creamy feel of a food and beverage item, wherein the yeast extract is the yeast extract according to any one of claims 1 to 3.

5. A taste-improving agent for a food and beverage item comprising the yeast extract according to any one of claims 1 to 3 as an active ingredient.
